# EUROPEAN PATENT APPLICATION

(11) **EP 4 358 229 A1**
(43) Date of publication of application: **24.04.2024**
(21) Application number: 23831891.9
(22) Date of filing: 28.06.2023
(51) Int. Cl.: H01M 10/42, H01M 50/595, H01M 50/586, H01M 10/04, H01M 10/0587

(54) **ELECTRODE ASSEMBLY, SECONDARY BATTERY, BATTERY PACK, AND VEHICLE**

(30) Priority: 28.06.2022 KR 20220078696; 27.06.2023 KR 20230082700
(71) Applicant: LG Energy Solution, Ltd., Seoul 07335 (KR)
(72) Inventor: JEONG, Ji Woo, Daejeon 34122 (KR); KWON, Tae Hyun, Daejeon 34122 (KR); KIM, Hyoung Kwon, Daejeon 34122 (KR)
(74) Representative: Goddar, Heinz J.
(86) International application number: PCT/KR2023/009006
(87) International publication number: WO 2024/005532

(57) **Abstract**

The present invention provides an electrode assembly in which a first electrode, a separator and a second electrode are stacked and wound, wherein an outermost portion of the electrode assembly includes an empty space in which the first electrode covers an end portion of the second electrode with the separator interposed therebetween, and a thickness buffer portion provided in the empty space, and a secondary battery including the electrode assembly. The present invention also provides a battery pack including the secondary battery and a vehicle including the battery pack.

## Description

### [Technical Field]

The present invention relates to an electrode assembly, a secondary battery, a battery pack, and a vehicle. The present application claims priority to and the benefit of Korean Patent Application No. 10-2022-0078696 filed in the Korean Intellectual Property Office on June 28, 2022, the entire contents of which are incorporated herein by reference.

### [Background Art]

Due to characteristics of being easily applicable to various products and electrical characteristics such as high energy density, a secondary battery is not only commonly applied to a portable device, but universally applied to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels is dramatically reduced as well as the secondary advantage that no by-products are generated from the use of energy.

Currently, widely used secondary batteries include lithium ion batteries, lithium polymer batteries, nickelcadmium batteries, nickel-hydrogen batteries, nickel-zinc batteries, and the like. The operating voltage of a unit secondary battery cell is about 2.5 V to 4.5 V. Therefore, when a higher output voltage is required, a battery pack may be configured by connecting a plurality of secondary batteries in series. In addition, a battery pack may be configured by connecting a plurality of secondary batteries in parallel according to the charge/discharge capacity required for the battery pack. Accordingly, the number of secondary batteries included in the battery pack and the form of electrical connection may be variously set according to the required output voltage and/or charge/discharge capacity.

### [Detailed Description of the Invention]

### [Technical Problem]

The present invention is to provide an electrode assembly and a secondary battery capable of realizing a high energy density by providing a thickness buffer portion in an empty space at the outermost portion of the electrode assembly.

Another object of the present invention is to provide a battery pack including a secondary battery having an improved structure as described above, and a vehicle including the battery pack.

However, the technical problem to be solved by the present invention is not limited to the above-described problem, and other problems not described will be apparently understood by one skilled in the art from the following description.

### [Technical Solution]

An exemplary embodiment of the present invention provides an electrode assembly in which a first electrode, a separator, and a second electrode are stacked and wound, wherein an outermost portion of the electrode assembly includes an empty space in which the first electrode covers an end portion of the second electrode with the separator interposed therebetween, and a thickness buffer portion provided in the empty space.

Another exemplary embodiment of the present invention provides a secondary battery including the electrode assembly according to the exemplary embodiment described above.

Still another exemplary embodiment of the present invention provides a battery pack including the secondary battery according to the exemplary embodiment described above.

Yet another exemplary embodiment of the present invention provides a vehicle including the battery pack according to the exemplary embodiment described above.

### [Advantageous Effects]

When coating an electrode active material layer on a current collector according to a development trend portion of secondary batteries for which high capacity and high output are required, the thickness of the current collector becomes thinner in order to increase an energy density of an electrode, and the thickness of the electrode active material layer coated on the current collector becomes thicker.

In electrode assemblies of the related art, when a positive electrode has a free edge where an end portion of the current collector and an end portion of the electrode active material layer coincide with each other, an end portion of the positive electrode coated with the thick electrode active material layer at the outermost portion of the electrode assembly is covered with a negative electrode, and resultantly, an empty space is created.

When the electrode assembly undergoes repeated charging and discharging, stress is concentrated in the empty space formed on one side of the negative electrode facing an end portion of the free edge of the positive electrode, resulting in frequent generation of cracks.

According to the exemplary embodiments of the present invention, by providing the thickness buffer portion in the empty space formed in the negative electrode at the outermost portion of the electrode assembly, generation of cracks that may be formed due to the empty space can be prevented.

As a result, it is possible to solve safety problems that may be caused due to cracks formed in the negative electrode, and thus, to stably increase the current that is applied to the battery. Accordingly, it is possible to implement a high energy density and to provide a high-capacity, high-output secondary battery.

However, advantageous effects to be obtained by the present invention are not limited to the effects described above, and other effects not described herein can be clearly understood by one skilled in the art from the following description of the present invention.

### [Brief Description of Drawings]

The accompanying drawings illustrate preferred exemplary embodiments of the present invention, and together with the following description of the present invention, serve to provide further understanding of the technical spirit of the present invention, and therefore, the present invention should not be construed as being limited to the drawings.
FIG. 1 is a view schematically showing a form in which a first electrode and a second electrode face each other at an outermost portion of an electrode assembly of the related art according to a Comparative Example of the present invention.
FIG. 2 is a photograph showing a case in which a crack is generated due to an empty space formed on one side of the first electrode at the outermost portion of the electrode assembly of the related art according to the Comparative Example of the present invention.
FIG. 3(a) is a view showing an electrode assembly according to FIG. 1, and FIG. 3(b) is a view showing an electrode assembly according to an exemplary embodiment of the present invention.
FIG. 4 is a view schematically showing a form in which a first electrode and a second electrode face each other at an outermost portion of an electrode assembly according to an exemplary embodiment of the present invention.
FIG. 5 shows an electrode assembly according to an exemplary embodiment of the present invention, in which (a) is a front view and (b) is a plan view.
FIGS. 6 to 8 are plan views schematically showing a first electrode and a second electrode of an electrode assembly according to an exemplary embodiment of the present invention.
FIG. 9 is a view showing a schematic configuration of a battery pack including secondary batteries according to an exemplary embodiment of the present invention.
FIG. 10 is a view showing a schematic configuration of a vehicle including a battery pack according to an exemplary embodiment of the present invention.

### <Explanation of Reference Numerals and Symbols>

1, 111: electrode assembly
2, 211: outermost portion of electrode assembly
10, 100: first electrode
11, 110: first electrode current collector
12, 13, 120, 130: first electrode active material layer
14, 140: first electrode tab
15, 150: first electrode uncoated portion
16, 160: protective tape
20, 200: second electrode
21, 210: second electrode current collector
22, 23, 220, 230: second electrode active material layer
24, 240: second electrode tab
25, 250: end portion of second electrode
40, 400: empty space
500: thickness buffer portion
600: secondary battery
700: battery pack
710: pack housing
800: vehicle
C: crack
H: direction of winding axis
HL: length of thickness buffer portion in direction of winding axis
P: direction perpendicular to winding axis
PL: length of thickness buffer portion in direction perpendicular to winding axis
T1: thickness of end portion of second electrode
T2: thickness of thickness buffer portion
I: interval between end portion of second electrode and thickness buffer portion

### [Best Mode]

The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

Throughout the present specification, unless explicitly described to the contrary, when a part "includes", "comprises" or "has" a certain constituent element, this does not mean that another constituent element is excluded, but means that another constituent element may be further included.

In addition, terms such as "part" described in the specification should be understood as a unit that performs at least one function or operation.

The configurations described in the following description with reference to the accompanying drawings do not represent all technical concepts or ideas of the present invention but should be considered to be exemplary embodiments of the present disclosure. Therefore, it should be understood that various modifications and equivalents of the exemplary embodiments may be devised within the scope of the present invention at the time of the filing of the application.

In order to help understanding of the invention, in the accompanying drawings, some components may not be drawn to scale, but their dimensions may be exaggerated. In addition, the same reference numbers may be assigned to the same components in different exemplary embodiments.

Hereinafter, an exemplary embodiment of the present invention will be described with reference to the drawings.

An exemplary embodiment of the present invention provides an electrode assembly 111 in which a first electrode 100, a separator, and a second electrode 200 are stacked and wound, wherein an outermost portion 211 of the electrode assembly includes an empty space 400 in which the first electrode 100 covers an end portion 250 of the second electrode with the separator interposed therebetween, and a thickness buffer portion 500 provided in the empty space 400.

The first electrode 100 may be a negative electrode, and the second electrode 200 may be a positive electrode.

By providing the thickness buffer portion 500 in the empty space 400 formed at the outermost portion 211 of the electrode assembly, generation of cracks that may be formed by the empty space 400 can be prevented, and safety problems that may be caused due to cracks can be solved.

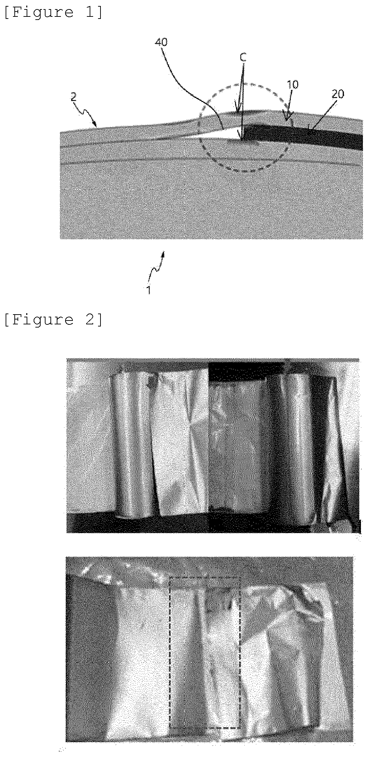

FIG. 1 is a view schematically showing a form in which a first electrode 10 and a second electrode 20 face each other at an outermost portion 2 of an electrode assembly of the related art according to a Comparative Example of the present invention, and FIG. 2 is a photograph showing a case in which a crack is generated due to an empty space formed on one side of the first electrode at the outermost portion of the electrode assembly of the related art according to the Comparative Example of the present invention.

Referring to FIGS. 1 and 2, when an end portion of a second electrode 20 of an existing electrode assembly 1 has a free edge where an end portion of a current collector and an end portion of an electrode active material layer coincide with each other, an end portion of the second electrode 20 coated with a thick electrode active material layer at an outermost portion 2 of the electrode assembly is covered with a first electrode 10, and resultantly, an empty space 40 may be created.

The empty space 40 may be formed on one side of the first electrode 10 facing the end portion of the second electrode 20 with a separator interposed therebetween.

When the electrode assembly undergoes repeated charging and discharging, stress is concentrated in the empty space 40, and therefore, there arises a problem in that cracks C are frequently generated. For example, the empty space 40 may be formed in an active material layer or uncoated portion provided on a current collector on one side of the first electrode 10 facing the end portion of the second electrode 20, and when the electrode assembly is repeatedly charged and discharged, stress is concentrated on the active material layer or uncoated portion, and thus cracks may be easily generated.

According to an exemplary embodiment, the description "the second electrode 200 has a free edge" means that the end portion of a current collector 210 and end portions of the electrode active material layers 220 and 230 coincide with each other at the second electrode. For example, an end portion 250 of the second electrode may not be formed with an uncoated portion.

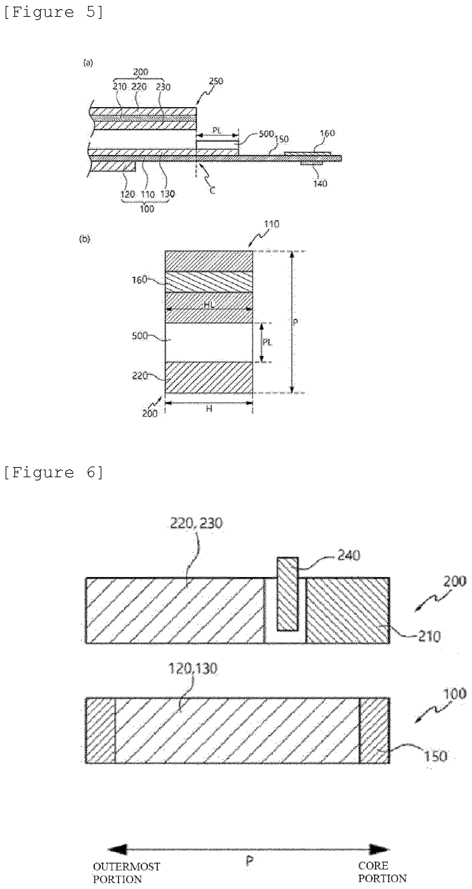

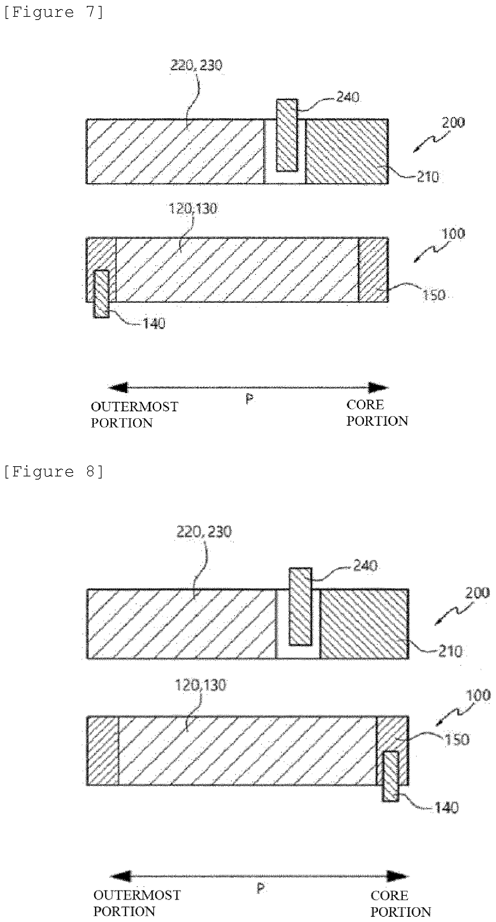

Accordingly, the second electrode 200 may have a middle tab structure, and the middle tab structure means further including a second electrode tab 240 provided at a portion other than both end portions in a direction P perpendicular to a winding axis of the electrode assembly. Therefore, both end portions in the direction P perpendicular to the winding axis of the electrode assembly may have free edges without an uncoated portion (refer to FIGS. 6 to 8 to be described later).

In the existing electrode assembly, when the end portion of the second electrode 20 has a free edge where the end portion of the current collector and the end portion of the electrode active material layer coincide with each other, stress is concentrated due to the empty space 40, resulting in generation of cracks C. This may cause safety problems such as a short circuit or ignition at the electrode.

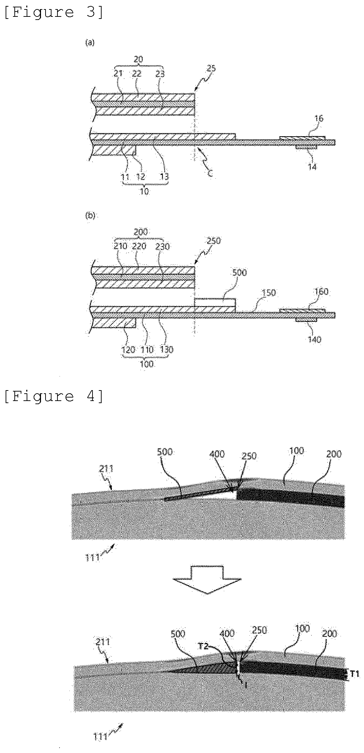

FIG. 3(a) is a front view showing the first electrode 10 and the second electrode 20 at the outermost portion 2 of the electrode assembly according to a Comparative Example of the present invention, and FIG. 3(b) is a front view showing the first electrode 100 and the second electrode 200 at the outermost portion 211 of the electrode assembly according to an exemplary embodiment of the present invention.

Referring to FIGS. 3(a) and 3(b), the electrode assemblies 1 and 111 include first electrodes 10 and 100, separators (not shown), and second electrodes 20 and 200, respectively. For example, the electrode assemblies 1 and 111 may be obtained by stacking and winding the first electrodes 10 and 100, the separators (not shown), and the second electrodes 20 and 200. In FIG. 3, only the first electrodes 10 and 100 and the second electrodes 20 and 200 are shown without the separators, but it is also possible that two or more unit cells composed of the first electrodes 10 and 100 and the second electrodes 20 and 200 are wound.

Referring to FIG. 3(a), when an end portion 25 of the second electrode of the existing electrode assembly 1 has a free edge where an end portion of a current collector and an end portion of an electrode active material layer coincide with each other, the end portion 25 of the second electrode coated with a thick electrode active material layer at an outermost portion 2 of the electrode assembly is covered with the first electrode 10, and resultantly, an empty space 40 may be created. When the electrode assembly 1 undergoes repeated charging and discharging, stress may be concentrated in the empty space 40 formed on one side of the first electrode facing the end portion 25 of the second electrode, resulting in generation of cracks C.

The empty space 40 formed on one side of the first electrode may be formed on one side of a first electrode active material layer 13 or a first electrode uncoated portion 15 provided in the first electrode current collector 11, and when the electrode assembly 1 is repeatedly charged and discharged, stress is concentrated on the first electrode active material layer 13 or the first electrode uncoated portion 15, and resultantly, cracks C may be easily generated.

FIG. 4 is a view schematically showing a form in which the first electrode 100 and the second electrode 200 face each other at the outermost portion 211 of the electrode assembly according to an exemplary embodiment of the present invention.

FIG. 5 shows the electrode assembly 111 according to an exemplary embodiment of the present invention, in which (a) is a front view and (b) is a plan view.

Referring to FIGS. 3(b) to 5, the electrode assembly 111 may have a jelly roll structure in which the first electrode 100, a separator (not shown), and the second electrode 200 are stacked and wound, and the electrode assembly 111 may be wound in a circular or elliptical shape.

The outermost portion 211 of the electrode assembly may be provided at a termination portion of winding of the wound electrode assembly, and may be a portion farthest in a direction of a winding axis.

An empty space 400 covering the end portion 250 of the second electrode with the separator interposed therebetween may be formed on one side of the first electrode 100 at the outermost portion 211 of the electrode assembly, and may include a thickness buffer portion 500.

By providing the thickness buffer portion 500 in the empty space 400 formed on one side of the first electrode 100 at the outermost portion 211 of the electrode assembly, generation of cracks due to the empty space 400 can be prevented.

According to an exemplary embodiment, the first electrode 100 includes a first electrode current collector 110 and a first electrode active material layer 130 provided on the first electrode current collector 110, and the thickness buffer portion 500 is provided directly or via the separator on a surface of the first electrode facing a central portion of winding between the end portion 250 of the second electrode and an end portion of the first electrode active material layer 130.

The thickness buffer portion 500 is not limited to a length from the end portion 250 of the second electrode to the end portion of the first electrode active material layer 130. For example, the thickness buffer portion 500 may be provided directly or via the separator on the surface of the first electrode facing the central portion of winding between the end portion of the second electrode and the first electrode uncoated portion 150 beyond the end portion of the first electrode active material layer 130.

For example, the thickness buffer portion 500 may be provided to have a length of 50% or greater of a length between the end portion 250 of the second electrode and the end portion of the first electrode active material layer 130. The thickness buffer portion 500 may have a length of 50% or greater, 55% or greater, 60% or greater, 65% or greater or 70% or greater of the length between the end portion 250 of the second electrode and the end portion of the first electrode active material layer 130. The thickness buffer portion 500 may have a length of 100% or less, 95% or less, or 90% or less of the length between the end portion 250 of the second electrode and the end portion of the first electrode active material layer 130.

When the above range is satisfied, the thickness buffer portion 500 provided in the empty space 400 formed at the outermost portion 211 of the electrode assembly can prevent generation of cracks due to the empty space 400.

According to an exemplary embodiment, the thickness buffer portion is provided to have a thickness equal to or less than a thickness of the end portion of the second electrode. For example, a thickness T2 of the thickness buffer portion may be 70% to 100%, based on 100% of a thickness T1 of the end portion of the second electrode.

By providing the thickness buffer portion having the thickness range, generation of cracks due to the empty space 400 in the electrode assembly 111 can be prevented.

According to an exemplary embodiment, the thickness buffer portion 500 does not overlap the end portion 250 of the second electrode, and may be provided spaced apart from the end portion 250 of the second electrode by an interval I of 3 mm or less.

If the thickness buffer portion is provided in contact with the end portion of the second electrode without being spaced apart from the end portion of the second electrode by the interval I, the empty space 400 formed at the outermost portion of the electrode assembly may be increased. Therefore, when the electrode assembly 111 is repeatedly charged and discharged, stress may be concentrated in the empty space 400, resulting in generation of cracks.

The thickness buffer portion is provided to have a length of 50% to 100%, based on 100% of a length of the electrode assembly in the direction of the winding axis of the electrode assembly.

A length HL of the thickness buffer portion may be 50% or greater, 55% or greater, 60% or greater, 65% or greater, or 70% or greater, based on 100% of the length of the electrode assembly in the direction H of the winding axis of the electrode assembly. The length HL of the thickness buffer portion may be 100% or less, 95% or less, 90% or less, 85% or less, or 80% or less, based on 100% of the length of the electrode assembly in direction H of the winding axis of the electrode assembly.

When the above range is satisfied, the thickness buffer portion 500 provided in the empty space 400 formed at the outermost portion 211 of the electrode assembly can prevent generation of cracks due to the empty space 400.

According to an exemplary embodiment, the second electrode 200 includes a second electrode current collector 210 and second electrode active material layers 220 and 230 provided on the second electrode current collector 210, and an end portion of the second electrode current collector 210 and end portions of the second electrode active material layers 220 and 230 coincide with each other at the end portion 250 of the second electrode.

The configuration in which the end portion of the second electrode current collector 210 and the end portions of the second electrode active material layers 220 and 230 coincide with each other at the end portion 250 of the second electrode may mean that the end portion 250 of the second electrode in the electrode assembly 111 has a free edge, and an uncoated portion is not formed at both end portions of the second electrode 200 in a direction P perpendicular to the winding axis of the electrode assembly.

The configuration in which the end portion of the second electrode current collector 210 and the end portions of the second electrode active material layers 220 and 230 coincide with each other means that lengths of the second electrode current collector 210 and the second electrode active material layers 220 and 230 are the same at the end portion 250 of the second electrode, and in this case, the lengths of the second electrode current collector 210 and the second electrode active material layers 220 and 230 may be within a general error range known in the art. For example, the length of the second electrode current collector 210 relative to the lengths of the second electrode active material layers 220 and 230 at the end portion 250 of the second electrode may be equal to or less than +0.5%.

According to an exemplary embodiment, the end portion 250 of the second electrode is provided at a termination portion of winding of the wound electrode assembly.

The first electrode 100 may include the first electrode active material layers 120 and 130 on at least one surface of the first electrode current collector 110, and the second electrode 200 may include the second electrode active material layers 220 and 230 on at least one surface of the second electrode current collector 210.

The first electrode 100 and the second electrode 200 are not particularly limited, and can be manufactured in such a form that the first electrode active material layer or the second electrode active material layer is bound to the first electrode current collector 110 or the second electrode current collector 210 according to a conventional method known in the art.

The first electrode 100 has the first electrode active material layer 130 provided on one surface of the first electrode current collector 110 at the outermost portion 211 of the electrode assembly, and may include an uncoated portion 150 without the active material layer.

On the other hand, the end portion 250 of the second electrode may be present at the outermost portion 211 of the electrode assembly.

The end portion 250 of the second electrode has the second electrode active material layers 220 and 230 each provided on both surfaces of the second electrode current collector 210, and has a free edge structure that does not include an uncoated portion. That is, the end portion 250 of the second electrode overlaps the end portion of the current collector 210 and the end portions of the electrode active material layers 220 and 230, and may include the end portions of the second electrode active material layers 220 and 230 and the end portion of the second electrode current collector 210 having the same length in the direction P perpendicular to the winding axis.

According to an example, the first electrode active material layer 130 of the first electrode 100 may face the second electrode active material layer 230 of the second electrode 200 with the separator interposed therebetween.

According to an exemplary embodiment, the first electrode 100 is provided longer in the direction P perpendicular to the winding axis than the second electrode 200 facing with the separator interposed therebetween, and the first electrode active material layer 130 provided on the surface of the first electrode 100 facing the central portion of winding is provided longer in the direction P perpendicular to the winding axis than the end portion 250 of the second electrode facing with the separator interposed therebetween.

The first electrode active material layer 130 is provided longer than the end portion 250 of the second electrode, i.e., the second electrode active material layer 230, so that damage to the separator can be prevented even while the electrode assembly 111 is charged, and reduction in battery life can be prevented.

The first electrode 100 extends longer than the second electrode 200. That is, the end portion 250 of the second electrode is formed shorter than the end portion of the first electrode 100 facing the second electrode.

Therefore, the first electrode 100 can cover the end portion 250 of the second electrode with the separator interposed therebetween at the outermost portion 211 of the electrode assembly. The end portion 250 of the second electrode may be provided at a termination portion of winding of the wound electrode assembly and may be located at the outermost portion 211 of the electrode assembly.

In the existing electrode assembly 1, when the end portion 25 of the second electrode has a free edge structure in which the end portion 25 of the second electrode current collector 21 and the end portions of the electrode active material layers 22 and 23 overlap, the empty space 40 may be formed while the first electrode 10 covers the end portion 25 of the second electrode with the separator interposed therebetween.

The empty space 40 may be formed on one surface or both surfaces of the first electrode 10 facing the second electrode 20 by the thickness T1 of the end portion of the second electrode. When charging and discharge are performed, stress may be concentrated in the empty space 40, which may damage the separator interposed therebetween or generate cracks C in the electrodes to cause a short circuit between both electrodes (refer to FIGS. 1 to 3(a)).

However, the outermost portion 211 of the electrode assembly according to an exemplary embodiment of the present invention includes the thickness buffer portion 500 in the empty space 400 in which the first electrode 100 covers the end portion 250 of the second electrode with the separator interposed therebetween. The thickness buffer portion 500 can relieve stress concentration in the empty space 400, thereby maintaining the separator between the first electrode 100 and the second electrode 200, and preventing cracks C in the electrode to secure the stability of the battery.

According to an exemplary embodiment, the thickness buffer portion 500 may be provided between a point facing the end portion 250 of the second electrode and an end portion of the first electrode active material layer 130. By providing the thickness buffer portion 500 at the above position, it is possible to prevent generation of cracks due to the empty space 400 and to solve safety problems that may be caused due to the cracks.

According to an exemplary embodiment of the present invention, the thickness buffer portion 500 is an electrolyte solution swelling layer.

The electrolyte solution swelling layer may be swollen or flexible by being immersed in a liquid, and may be made of a polymer material.

As one characteristic of the polymer material, a volume of the polymer material may be increased as solvent molecules enter between chains of the polymer material.

Therefore, since the electrolyte solution swelling layer is swollen or becomes flexible when absorbing an electrolyte solution, it can relieve the stress concentration in the empty space 400 to prevent generation of cracks due to the empty space 400, and solve safety problems that may be caused due to the cracks.

According to an exemplary embodiment, the electrolyte solution swelling layer includes polyurethane. However, the electrolyte solution swelling layer is not limited thereto as long as it is swollen by the electrolyte solution.

The electrolyte solution swelling layer includes the compound and is swollen by the electrolyte solution, thereby relieving stress concentration in the empty space 400 and preventing damages to the separator and the electrode.

The electrolyte solution swelling layer can be considered to be swollen when the thickness T2 of the thickness buffer portion is 90% to 100% of the thickness T1 of the end portion of the second electrode, and the thickness T2 of the thickness buffer portion can be measured using a thickness measuring device.

According to an exemplary embodiment of the present invention, the thickness buffer portion 500 is an electrolyte solution swelling tape including the electrolyte solution swelling layer.

According to an exemplary embodiment, a width HL of the swelling tape may be 50% to 100% of a width of the first electrode. The width HL of the swelling tape may be 50% or greater, 55% or greater, 60% or greater, 65% or greater, or 70% or greater of the width of the first electrode. The width HL of the swelling tape may be 100% or less, 95% or less, 90% or less, 85% or less, or 80% or less of the width of the first electrode.

When the width HL of the swelling tape satisfies the above range, generation of cracks that may be formed due to the empty space 400 can be prevented, and safety problems that may be caused due to the cracks can be solved.

According to an exemplary embodiment, the first electrode 100 includes the first electrode current collector 110 and the first electrode active material layer 130 provided on the first electrode current collector 110, and the electrolyte solution swelling tape is attached directly or via the separator on the surface of the first electrode facing the central portion of winding between the end portion 250 of the second electrode and the end portion of the first electrode active material layer 130.

For example, the electrolyte solution swelling tape may be provided to have a length of 50% or greater of the length between the end portion 250 of the second electrode and the end portion of the first electrode active material layer 130. The electrolyte solution swelling tape may be 50% or greater, 55% or greater, 60% or greater, 65% or greater, or 70% or greater of the length between the end portion 250 of the second electrode and the end portion of the first electrode active material layer 130. The electrolyte solution swelling tape may be 100% or less of the length between the end portion 250 of the second electrode and the end portion of the first electrode active material layer 130.

When the above range is satisfied, it is possible to prevent generation of cracks due to the empty space 400 and to solve safety problems that may be caused due to the cracks.

In addition, the electrolyte solution swelling tape is not limited to the length from the end portion 250 of the second electrode to the end portion of the first electrode active material layer 130. For example, the electrolyte solution swelling tape may be provided directly or via the separator on the surface of the first electrode facing the central portion of winding between the end portion of the second electrode and the first electrode uncoated portion 150 beyond the end portion of the first electrode active material layer 130.

According to an exemplary embodiment of the present invention, the first electrode 100 includes an uncoated portion 150 without the electrode active material layer at an edge portion of the first electrode current collector 110 provided at one end portion in the direction P perpendicular to the winding axis at the outermost portion 211 of the electrode assembly, and further includes a protective tape 160 provided on the uncoated portion 150.

According to an exemplary embodiment, the first electrode 100 further includes a tab 140 provided at one or more of both end portions in the longitudinal direction of the electrode assembly, i.e., in the direction P perpendicular to the winding axis of the electrode assembly, and the second electrode 200 further includes a tab 240 provided at a portion other than both end portions in the direction P perpendicular to the winding axis of the electrode assembly.

FIG. 5 shows the electrode assembly 111 according to an exemplary embodiment of the present invention, in which (a) is a front view and (b) is a plan view.

FIGS. 6 to 8 are plan views schematically showing a first electrode and a second electrode of an electrode assembly according to an exemplary embodiment of the present invention.

Referring to FIGS. 5 to 8, the first electrode tab 140 is electrically connected to the first electrode current collector 110 of the first electrode 100 and protrudes to the outside of the electrode assembly 111. The first electrode tab 140 provides a passage through which current is input and output during charging or discharging of a secondary battery.

In this case, the protective tape 160 may be located on the uncoated portion 150 of the first electrode current collector electrically connected to the first electrode tab 140 and at an opposite portion in the thickness direction of the uncoated portion, for example, at a mark. In this way, the protective tape 160 can cover and protect not only the first electrode tab 140 but also the mark that may be generated on the opposite side thereto when the first electrode tab 140 is formed. In addition, according to the convenience of the manufacturing process of the battery, an end portion of the protective tape 160 of the first electrode may coincide with the end portion of the first electrode.

By providing the protective tape 160 to the first electrode 100, a short circuit with the end portion 250 of the second electrode can be prevented. In addition, the protective tape 160 can prevent a short circuit between the outermost first electrode 100 and the outermost second electrode 200 due to the mark generated when the first electrode tab 140 is formed. Therefore, the protective tape 160 provided on the first electrode 100 facing the second electrode 200 can prevent the short circuit of the electrode.

A length of the protective tape 160 in the direction H of the winding axis may be about 100 to about 120%, and preferably about 105 to about 110% of the length in the direction H of the winding axis of the first electrode current collector 110. When the length of the protective tape 160 in direction H of the winding axis satisfies the above range, a short circuit between electrodes can be prevented and a desired electrochemical reaction of the first electrode active material can be induced.

The protective tape 160 may include one or more selected from the group consisting of polypropylene, polyethylene terephthalate, and polyimide. In addition, the protective tape 160 can be adhered and protected with excellent elasticity and durability in response to volume changes caused by charging and discharging of the first electrode active material layer.

An exemplary embodiment of the present invention provides a secondary battery 600 including at least one electrode assembly 111 described above.

According to an exemplary embodiment, the secondary battery 600 may include the electrode assembly 111, a battery can, a sealing body, and a terminal.

In the electrode assembly 111, the first electrode 100 may be a negative electrode, and the second electrode 200 may be a positive electrode having a polarity opposite to that of the first electrode 100. The first electrode 100 and the second electrode 200 may have a sheet shape. The electrode assembly 111 may have, for example, a jelly roll shape. That is, the electrode assembly 111 may be manufactured by winding a laminate about a winding center, which is formed by stacking at least once the first electrode 100, the separator, the second electrode 200, and the separator sequentially. In this case, an additional separator may be provided on an outer circumferential surface of the electrode assembly 111 for insulation with the battery can.

In the present invention, a positive electrode active material coated on a positive electrode current collector and a negative electrode active material coated on a negative electrode current collector can be used without limitation as long as they are active materials known in the art.

Non-limiting examples of the positive electrode active material may include usual positive electrode active materials that can be used for a positive electrode of a conventional electrochemical device, and in particular, a lithium manganese oxide, a lithium cobalt oxide, a lithium nickel oxide, a lithium iron oxide, or a lithium composite oxide made by combining them may be used.

In one example, the positive electrode active material may include an alkali metal compound represented by a general formula A[AₓM_{y}]O_{2+z} (A includes at least one element of Li, Na and K; M includes at least one element selected from Ni, Co, Mn, Ca, Mg, Al, Ti, Si, Fe, Mo, V, Zr, Zn, Cu, Sc, Ru, and Cr; x≥0, 1≤x+y≤2, -0.1≤z≤2; x, y and z, and stoichiometric coefficients of components included in M are selected such that a compound remains electrically neutral).

In another example, the positive electrode active material may be an alkali metal compound xLiM¹O₂-(1-x)Li₂M²O₃ (M¹ includes at least one element having an average oxidation state of 3; M² includes at least one element having an average oxidation state of 4; 0≤x≤1) disclosed in US6,677,082, US6,680,143, and the like.

In another example, the positive electrode active material may be a lithium metal phosphate represented by a general formula LiₐM¹ₓFe₁₋ₓM²P_{y1-y}M³_{z}O_{4-z} (M¹ includes at least one element selected from Ti, Si, Mn, Co, Fe, V, Cr, Mo, Ni, Nd, Al and Mg; M² includes at least one element selected from Ti, Si, Mn, Co, Fe, V, Cr, Mo, Ni, Nd, Al, Mg, As, Sb, Ge, V and S; M³ includes an element in a halogen group optionally including F; 0<a≤2, 0≤x≤1, 0≤y<1, 0≤z<1; a, x, y, z, and stoichiometric coefficients of components included in M¹, M², and M³ are selected such that the compound remains electrically neutral) or Li₃M₂(PO₄)₃ [M includes at least one element selected from Ti, Si, Mn, Fe, Co, V, Cr, Mo, Ni, Al and Mg].

Preferably, the positive electrode active material may include a primary particle and/or a secondary particle in which the primary particles are aggregated.

Non-limiting examples of the negative electrode active material may include usual negative electrode active materials that can be used for a negative electrode of a conventional electrochemical device, and particularly, lithium adsorption materials such as a lithium metal or lithium alloy, carbon, petroleum coke, activated carbon, graphite or other carbonaceous materials may be used.

In one example, the negative electrode active material may use a carbon material, a lithium metal or lithium metal compound, silicon or a silicon compound, tin or a tin compound, or the like. A metal oxide such as TiO₂ and SnO₂ with a potential less than 2V may also be used as a negative electrode active material. As the carbon material, both low-crystalline carbon and high-crystalline carbon may be used.

Non-limiting examples of the positive electrode current collector include a foil or the like made of aluminum, nickel, or a combination thereof, and non-limiting examples of the negative electrode current collector include a foil or the like made of copper, gold, nickel, or a copper alloy or a combination thereof.

For the separator, a porous polymer film, for example, a porous polymer film made of a polyolefin-based polymer such as an ethylene homopolymer, a propylene homopolymer, an ethylene/butene copolymer, an ethylene/hexene copolymer or an ethylene/methacrylate copolymer may be used alone, or a structure obtained by laminating the polymers may be used. In another example, for the separator, a typical porous non-woven fabric, for example, a non-woven fabric formed of high melting point glass fibers, polyethylene terephthalate fibers, or the like may be used.

At least one surface of the separator may include a coating layer of inorganic particles.

In addition, it is also possible that the separator itself is made of a coating layer of inorganic particles. Particles constituting the coating layer may have a structure combined with a binder so that an interstitial volume exists between adjacent particles. The inorganic particles may be made of an inorganic material having a dielectric constant of 5 or greater. Non-limiting examples of the inorganic particles may include at least one material selected from the group consisting of Pb (Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure such as A⁺B⁻. Here, A⁺ includes ions composed of alkali metal cations such as Li⁺, Na⁺ and K⁺ or combinations thereof. B⁻ includes any one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅) ₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte can also be used by dissolving it in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma (γ) butyrolactone, or mixtures thereof may be used.

Another exemplary embodiment of the present invention provides a battery pack 700 including at least one secondary battery 600 described above. For example, the secondary battery 600 may be a cylindrical secondary battery.

The cylindrical secondary battery 600 according to the exemplary embodiment described above may be used to manufacture the battery pack 700.

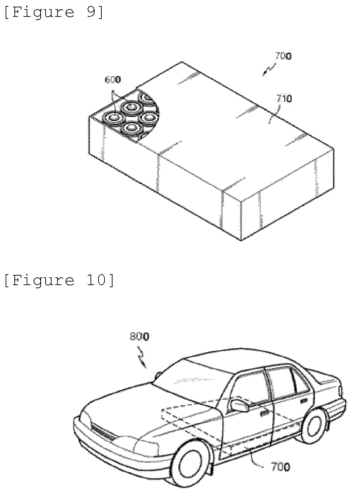

FIG. 9 is a view showing a schematic configuration of a battery pack 700 including the secondary batteries 600 according to an exemplary embodiment of the present invention.

Referring to FIG. 9, the battery pack 700 according to an exemplary embodiment of the present invention includes an assembly in which the cylindrical secondary batteries 600 are electrically connected, and a pack housing 710 for accommodating the assembly. The cylindrical secondary battery 600 is a battery cell according to the exemplary embodiment described above. In the drawing, for convenience of illustration, components such as a bus bar, a cooling unit and an external terminal for electrical connection of the cylindrical secondary batteries are omitted.

Another exemplary embodiment of the present invention provides a vehicle 800 including at least one battery pack 700 described above.

The battery pack 700 may be mounted on the vehicle 800. The vehicle 800 may be, for example, an electric vehicle, a hybrid vehicle, or a plug-in hybrid vehicle. The vehicle includes a four-wheeled vehicle or a two-wheeled vehicle.

FIG. 10 is a view for illustrating the vehicle 800 including the battery pack 700 in FIG. 9.

Referring to FIG. 10, the vehicle 800 according to an exemplary embodiment of the present invention includes the battery pack 700 according to an exemplary embodiment of the present invention. The vehicle operates by receiving power from the battery pack 700 according to an exemplary embodiment of the present invention.

Although the present invention has been described with reference to the limited embodiments and drawings, the present invention is not limited thereto, and a variety of modifications and variations can be made within the technical spirit of the present invention and the equivalent range of the claims described below by one skilled in the art to which the present invention belongs.

## Claims

1. An electrode assembly in which a first electrode, a separator and a second electrode are stacked and wound,
wherein an outermost portion of the electrode assembly comprises an empty space in which the first electrode covers an end portion of the second electrode with the separator interposed therebetween, and a thickness buffer portion provided in the empty space.

2. The electrode assembly of claim 1, wherein the first electrode comprises a first electrode current collector and a first electrode active material layer provided on the first electrode current collector, and
wherein the thickness buffer portion is provided directly or via the separator on a surface of the first electrode facing a central portion of winding between the end portion of the second electrode and an end portion of the first electrode active material layer.

3. The electrode assembly of claim 2, wherein the thickness buffer portion is provided to have a length of 50% or greater of a length between the end portion of the second electrode and the end portion of the first electrode active material layer.

4. The electrode assembly of claim 1, wherein the thickness buffer portion is provided to have a thickness equal to or less than a thickness of the end portion of the second electrode.

5. The electrode assembly of claim 4, wherein the thickness buffer portion is provided to have the thickness of 70% to 100% of the thickness of the end portion of the second electrode.

6. The electrode assembly of claim 1, wherein the thickness buffer portion is provided not to overlap the end portion of the second electrode.

7. The electrode assembly of claim 1, wherein the thickness buffer portion is provided to have a length of 50% to 100%, based on 100% of a length of the electrode assembly in a direction of a winding axis of the electrode assembly.

8. The electrode assembly of claim 1, wherein the second electrode comprises a second electrode current collector and a second electrode active material layer provided on the second electrode current collector, and
wherein an end portion of the second electrode current collector and an end portion of the second electrode active material layer coincide with each other at the end portion of the second electrode.

9. The electrode assembly of claim 1, wherein the end portion of the second electrode is provided at a termination portion of winding of the wound electrode assembly.

10. The electrode assembly of claim 1, wherein the first electrode is provided longer in a direction perpendicular to a winding axis than the second electrode facing with the separator interposed therebetween.

11. The electrode assembly of claim 2, wherein the first electrode active material layer provided on a surface of the first electrode facing a central portion of winding is provided longer in a direction perpendicular to a winding axis than the end portion of the second electrode facing with the separator interposed therebetween.

12. The electrode assembly of claim 1, wherein the thickness buffer portion is an electrolyte solution swelling layer.

13. The electrode assembly of claim 12, wherein the electrolyte solution swelling layer comprises polyurethane.

14. The electrode assembly of claim 12, wherein the thickness buffer portion is an electrolyte solution swelling tape comprising the electrolyte solution swelling layer.

15. The electrode assembly of claim 14, wherein the first electrode comprises a first electrode current collector and a first electrode active material layer provided on the first electrode current collector, and
wherein the electrolyte solution swelling tape is attached directly or via the separator on a surface of the first electrode facing a central portion of winding between the end portion of the second electrode and the end portion of the first electrode active material layer.

16. The electrode assembly of claim 2, wherein the first electrode comprises an uncoated portion without the first electrode active material layer at an edge portion of the first electrode current collector provided at one end portion in a direction perpendicular to a winding axis at an outermost portion of the electrode assembly, and
wherein the electrode assembly further comprises a protective tape provided on the uncoated portion.

17. The electrode assembly of claim 1, wherein the first electrode further comprises a tab provided at one or more of both end portions in a direction perpendicular to a winding axis of the electrode assembly.

18. The electrode assembly of claim 1, wherein the second electrode further comprises a tab provided at a portion other than both end portions in a direction perpendicular to a winding axis of the electrode assembly.

19. The electrode assembly of claim 1, wherein the first electrode is a negative electrode and the second electrode is a positive electrode.

20. A secondary battery comprising the electrode assembly of any one of claims 1 to 19.

21. A battery pack comprising the secondary battery of claim 20.

22. A vehicle comprising at least one battery pack of claim 21.
